# EUROPÄISCHE PATENTANMELDUNG

(11) **EP 1 470 846 A1**
(43) Veröffentlichungstag der Anmeldung: **27.10.2004**
(21) Anmeldenummer: 04002511.6
(22) Anmeldetag: 05.02.2004
(51) Int. Cl.: B01D 15/08

(54) **Reinigung oder Aufarbeitung von ionischen Flüssigkeiten mit adsorptiven Trennverfahren**

(30) Priorität: 25.03.2003 DE 10313207
(71) Anmelder: BASF AKTIENGESELLSCHAFT, 67056 Ludwigshafen (DE)
(72) Erfinder: Beste, York Alexander, Dr., 68161 Mannheim (DE); Ciprian, Jürgen, Dr., 67071 Ludwigshafen (DE); Maurer, Stephan, Dr., 67459 Böhl-Iggelheim (DE)

(57) **Zusammenfassung**

Verfahren zur Aufarbeitung eines Gemisches enthaltend ionischen Flüssigkeiten und eine weitere Substanz, wobei man die enthaltene Substanz mittels adsorptiver Trennverfahren abtrennt.

## Beschreibung

Die vorliegende Erfindung betrifft ein verbessertes Verfahren zur Reinigung oder Aufarbeitung von ionischen Flüssigkeiten (IF).

Ionische Flüssigkeiten stellen eine Stoffklasse dar, die noch nicht lange Anwendung findet. Es handelt sich dabei um relativ niedrigviskose, wenig korrosive, Salzschmelzen, die bei relativ niedrigen Temperaturen - meist kleiner 100°C, bevorzugt bei Raumtemperatur - flüssig sind. Sie werden zur Zeit an Hochschulen und der Industrie viel beforscht. Es gibt erste kommerzielle Anwendungen und es ist zu erwarten, das die Anzahl der Anwendungen in Zukunft stark steigen wird. Umfangreich werden ionische Flüssigkeiten z.B. von Wasserscheid und Keim in der Angewandten Chemie 2000, 112, 3926 ― 3945 beschrieben.

Als ionische Flüssigkeiten werden erfindungsgemäß solche Verbindungen bezeichnet, die mindestens eine positive und mindestens eine negative Ladung aufweisen, insgesamt jedoch ladungsneutral sind, und einen Schmelzpunkt unter 200°C aufweisen, bevorzugt unter 100, besonders bevorzugt unter 50°C.

Die Ionischen Flüssigkeiten können auch mehrere positive oder negative Ladungen aufweisen, beispielsweise 1 bis 5, bevorzugt 1 bis 4, besonders bevorzugt 1 bis 3, ganz besonders bevorzugt 1 bis 2, insbesondere jedoch je eine positive und negative Ladung.

Die Ladungen können sich an verschiedenen lokalisierten oder delokalisierten Bereichen innerhalb eines Moleküls befinden, also betainartig, oder auf je ein getrenntes Anion und Kation verteilt sein. Bevorzugt sind solche Ionischen Flüssigkeiten, die aus mindestens einem Kation und mindestens einem Anion aufgebaut sind. Kation und Anion können, wie oben ausgeführt, ein oder mehrfach, bevorzugt einfach geladen sein.

Selbstverständlich sind auch Gemische verschiedener ionischer Flüssigkeiten denkbar.

Bevorzugt als Kation sind Ammonium- oder Phosphoniumionen, oder solche Kationen, die mindestens einen fünf- bis sechsgliedrigen Heterocyclus enthalten, der mindestens ein Phosphor- oder Stickstoffatom sowie gegebenenfalls ein Sauerstoff- oder Schwefelatom aufweist, besonders bevorzugt solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit ein oder zwei Stickstoffatomen.

Besonders bevorzugte Ionische Flüssigkeiten sind solche, die ein Molgewicht unter 1000 g/mol aufweisen, ganz besonders bevorzugt unter 350 g/mol.

Weiterhin sind solche Kationen bevorzugt, die ausgewählt sind aus den Verbindungen der Formeln (Ia) bis (Iw), 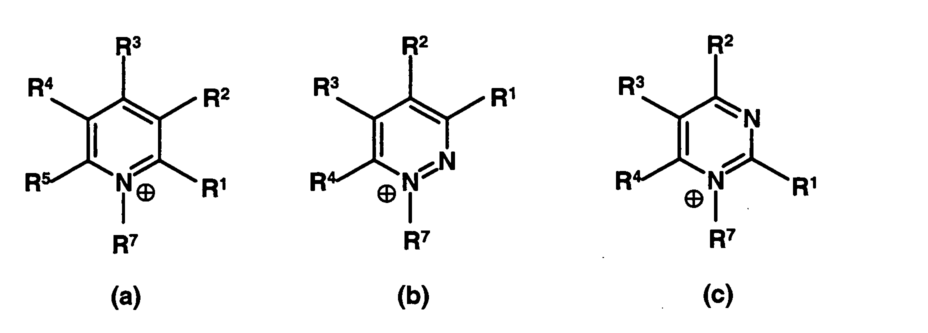 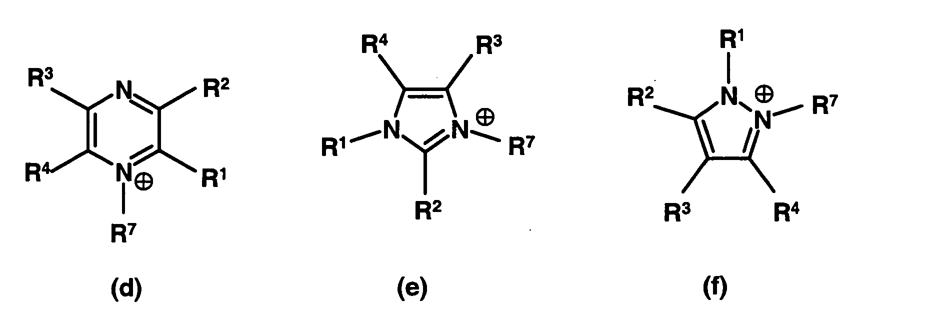 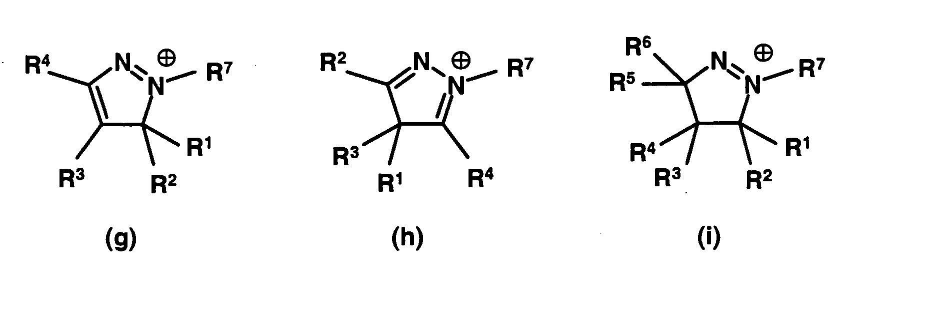 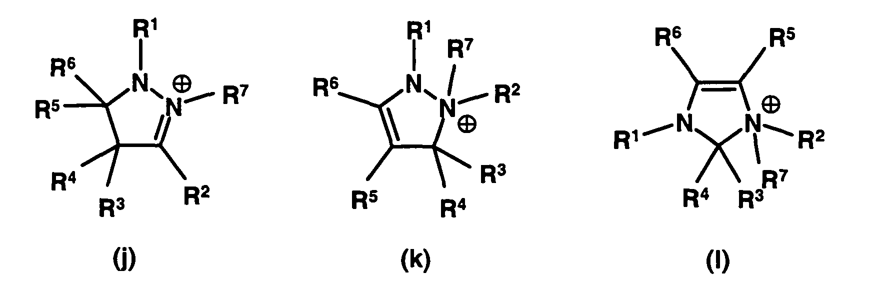 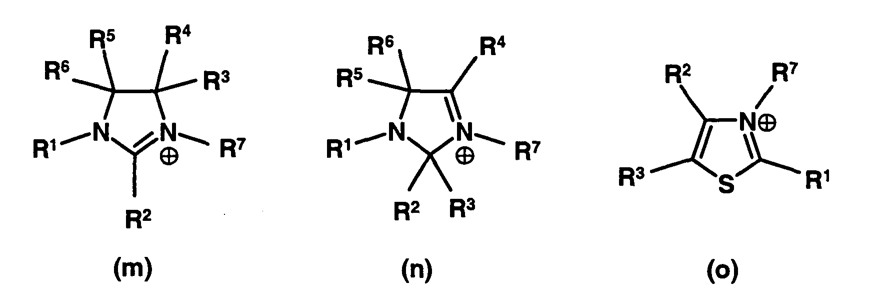 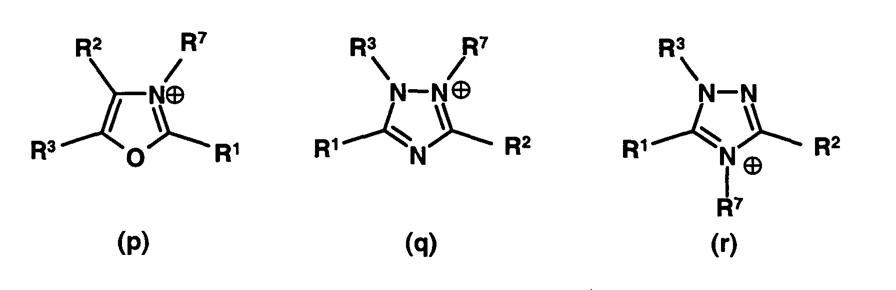 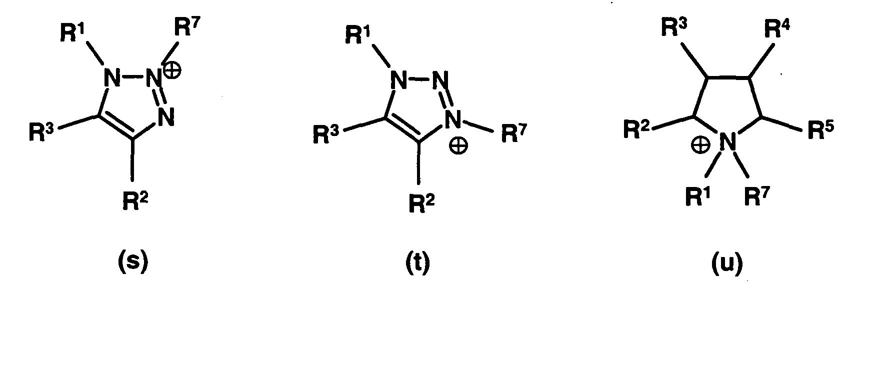 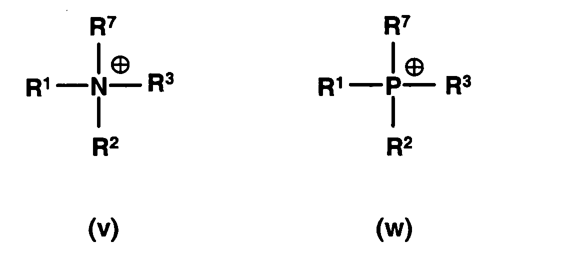 sowie Oligo- bzw. Polymere, die diese Strukturen enthalten,
worin
R¹, R², R³, R⁴, R⁵, R⁶ und R⁷ unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder zwei von ihnen gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

R¹, R², R³, R⁴, R⁵ und R⁶ können zusätzlich dazu Wasserstoff bedeuten.

R⁷ kann darüberhinaus C₁ - C₁₈-Alkyloyl (Alkylcarbonyl), C₁ - C₁₈- Alkyloxycarbonyl, C₅ - C₁₂-Cycloalkylcarbonyl oder C₆ - C₁₂-Aryloyl (Arylcarbonyl) bedeuten, wobei die genannten Reste jeweils durch funktionelle Gruppen, Aryl, Alkyl, Aryloxy, Alkyloxy, Halogen, Heteroatome und/oder Heterocyclen substituiert sein können.

Darin bedeuten
gegebenenfalls durch funktionelle Gruppen, Aryl, Alkyl, Aryloxy, Alkyloxy, Halogen, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl und,
gegebenenfalls durch ein oder mehrere Sauerstoff- und/oder Schwefelatome und/oder ein oder mehrere substituierte oder unsubstituierte Iminogruppen unterbrochenes C₂- C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxatetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxapentadecyl, 9-Ethoxy-5-oxa-nonyl oder 14-Ethoxy-5,10-oxa-tetradecyl.

Bilden zwei Reste einen Ring, so können diese Reste gemeinsam bedeuten 1,3-Propylen, 1,4-Butylen, 2-Oxa-1,3-propylen, 1-Oxa-1,3-propylen, 2-Oxa-1,3-propylen, 1-Oxa-1,3-propenylen, 1-Aza-1,3-propenylen, 1-C₁-C₄-Alkyl-1-aza-1,3-propenylen, 1,4-Buta-1,3-dienylen, 1 -Aza-1,4-buta-1,3-dienylen oder 2-Aza-1,4-buta-1,3-dienylen.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, iso-Propylimino, n-Butylimino oder tert-Butylimino sein.

Weiterhin bedeuten
funktionelle Gruppen Carboxy, Carboxamid, Hydroxy, Di-(C₁-C₄-Alkyl)-amino, C₁-C₄-Alkyloxycarbonyl, Cyano oder C₁-C₄-Alkyloxy,
gegebenenfalls durch funktionelle Gruppen, Aryl, Alkyl, Aryloxy, Alkyloxy, Halogen, Heteroatome und/oder Heterocyclen substituiertes C₆ ― C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch funktionelle Gruppen, Aryl, Alkyl, Aryloxy, Alkyloxy, Halogen, Heteroatome und/oder Heterocyclen substituiertes C₅ ― C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl und
C₁, bis C₄-Alkyl beispielsweise Methyl, Ethyl, Propyl, Isopropyl, n-Butyl, sec-Butyl oder tert.-Butyl.

C₁ - C₁₈-Alkyloyl (Alkylcarbonyl) kann beispielsweise sein Acetyl, Propionyl, n-Butyloyl, sec-Butyloyl, tert.-Butyloyl, 2-Etylhexylcarbonyl, Decanoyl, Dodecanoyl, Chloracetyl, Trichloracetyl oder Trifluoracetyl.

C₁ - C₁₈- Alkyloxycarbonyl kann beispielsweise sein Methyloxycarbonyl, Ethyloxycarbonyl, Propyloxycarbonyl, Isopropyloxycarbonyl, n-Butyloxycarbonyl, sec-Butyloxycarbonyl, tert.-Butyloxycarbonyl, Hexyloxycarbonyl, 2-Etylhexyloxycarbonyl oder Benzyloxycarbonyl.

C₅ - C₁₂-Cycloalkylcarbonyl kann beispielsweise sein Cyclopentylcarbonyl, Cyclohexylcarbonyl oder Cyclododecylcarbonyl.

C₆ - C₁₂-Aryloyl (Arylcarbonyl) kann beispielsweise sein Benzoyl, Toluyl, Xyloyl, α-Naphthoyl, β-Naphthoyl, Chlorbenzoyl, Dichlorbenzoyl, Trichlorbenzoyl oder Trimethylbenzoyl.

Bevorzugt sind R¹, R², R³, R⁴, R⁵ und R⁶ unabhängig voneinander Wasserstoff, Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Dimethylamino, Diethylamino und Chlor.

Bevorzugt ist R⁷ Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Acetyl, Propionyl, t-Butyryl, Methoxycarbonyl, Ethoxycarbonyl oder n-Butoxycarbonyl.

Besonders bevorzugte Pyridiniumionen (Ia) sind solche, bei denen einer der Reste R¹ bis R⁵ Methyl, Ethyl oder Chlor ist, R⁷ Acetyl, Methyl, Ethyl oder n-Butyl und alle anderen Wasserstoff sind, oder R³ Dimethylamino, R⁷ Acetyl, Methyl, Ethyl oder n-Butyl und alle anderen Wasserstoff sind oder R⁷ Acetyl, Methyl, Ethyl oder n-Butyl und alle anderen Wasserstoff sind oder R² Carboxy oder Carboxamid, R⁷ Acetyl, Methyl, Ethyl oder n-Butyl und alle anderen Wasserstoff oder R¹ und R² oder R² und R³ 1,4-Buta-1,3-dienylen, R⁷ Acetyl, Methyl, Ethyl oder n-Butyl und alle anderen Wasserstoff sind.

Besonders bevorzugte Pyridaziniumionen (Ib) sind solche, bei denen einer der Reste R¹ bis R⁴ Methyl oder Ethyl, R⁷ Acetyl, Methyl, Ethyl oder n-Butyl und alle anderen Wasserstoff oder R⁷ Acetyl, Methyl, Ethyl oder n-Butyl, und alle anderen Wasserstoff sind.

Besonders bevorzugte Pyrimidiniumionen (Ic) sind solche, bei denen R² bis R⁴ Wasserstoff oder Methyl, R⁷ Acetyl, Methyl, Ethyl oder n-Butyl und R¹ Wasserstoff, Methyl oder Ethyl ist, oder R² und R⁴ Methyl, R³ Wasserstoff und R¹ Wasserstoff, Methyl oder Ethyl und R⁷ Acetyl, Methyl, Ethyl oder n-Butyl ist.

Besonders bevorzugte Pyraziniumionen (Id) sind solche, bei denen
R¹ bis R⁴ alle Methyl und
R⁷ Acetyl, Methyl, Ethyl oder n-Butyl oder R⁷ Acetyl, Methyl, Ethyl oder n-Butyl und alle anderen Wasserstoff sind.

Besonders bevorzugte Imidazoliumionen (le) sind solche, bei denen unabhängig voneinander
R¹ ausgewählt ist unter Methyl, Ethyl, n-Propyl, n-Butyl, n-Pentyl, n-Octyl, n-Decyl, n-Dodecyl, 2-Hydroxyethyl oder 2-Cyanoethyl,
R⁷ Acetyl, Methyl, Ethyl oder n-Butyl und
R² bis R⁴ unabhängig voneinander Wasserstoff, Methyl oder Ethyl bedeuten.

Besonders bevorzugte 1 H-Pyrazoliumionen (If) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 3H-Pyrazoliumionen (Ig) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 4H-Pyrazoliumionen (Ih) sind solche, bei denen unabhängig voneinander
R¹ bis R⁴ unter Wasserstoff oder Methyl und
R⁷ unter Acetyl, Methyl, Ethyl oder n-Butyl ausgewählt sind.

Besonders bevorzugte 1-Pyrazoliniumionen (li) sind solche, bei denen unabhängig voneinander
R¹ bis R⁶ unter Wasserstoff oder Methyl und
R⁷ unter Acetyl, Methyl, Ethyl oder n-Butyl ausgewählt sind.

Besonders bevorzugte 2-Pyrazoliniumionen (Ij) sind solche, bei denen unabhängig voneinander
R¹ unter Wasserstoff, Methyl, Ethyl oder Phenyl,
R⁷ unter Acetyl, Methyl, Ethyl oder n-Butyl und
R² bis R⁶ unter Wasserstoff oder Methyl ausgewählt sind.

Besonders bevorzugte 3-Pyrazoliniumionen (Ik) sind solche, bei denen unabhängig voneinander
R' oder R² unter Wasserstoff, Methyl, Ethyl oder Phenyl,
R⁷ unter Acetyl, Methyl, Ethyl oder n-Butyl und
R³ bis R⁶ unter Wasserstoff oder Methyl
ausgewählt sind.

Besonders bevorzugte Imidazoliniumionen (II) sind solche, bei denen unabhängig voneinander
R¹ oder R² unter Wasserstoff, Methyl, Ethyl, n-Butyl oder Phenyl,
R⁷ unter Acetyl, Methyl, Ethyl oder n-Butyl und
R³ oder R⁴ unter Wasserstoff, Methyl oder Ethyl und
R⁵ oder R⁶ unter Wasserstoff oder Methyl
ausgewählt sind.

Besonders bevorzugte Imidazoliniumionen (Im) sind solche, bei denen unabhängig voneinander
R¹ oder R² unter Wasserstoff, Methyl oder Ethyl,
R⁷ unter Acetyl, Methyl, Ethyl oder n-Butyl und
R³ bis R⁶ unter Wasserstoff oder Methyl
ausgewählt sind.

Besonders bevorzugte Imidazoliniumionen (In) sind solche, bei denen unabhängig voneinander
R¹, R² oder R³ unter Wasserstoff, Methyl oder Ethyl,
R⁷ Acetyl, Methyl, Ethyl oder n-Butyl und
R⁴ bis R⁶ unter Wasserstoff oder Methyl
ausgewählt sind.

Besonders bevorzugte Thiazoliumionen (Io) oder Oxazoliumionen (Ip) sind solche, bei denen unabhängig voneinander
R¹ unter Wasserstoff, Methyl, Ethyl oder Phenyl,
R⁷ unter Acetyl, Methyl, Ethyl oder n-Butyl und
R² oder R³ unter Wasserstoff oder Methyl
ausgewählt sind.

Besonders bevorzugte 1,2,4-Triazoliumionen (Iq) und (Ir) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ unter Wasserstoff, Methyl oder Phenyl
ausgewählt sind.

Besonders bevorzugte 1,2,3-Triazoliumionen (Is) und (It) sind solche, bei denen unabhängig voneinander
R¹ unter Wasserstoff, Methyl oder Ethyl,
R⁷ unter Acetyl, Methyl, Ethyl oder n-Butyl und
R² oder R³ unter Wasserstoff oder Methyl ausgewählt sind oder
R² und R³ 1 ,4-Buta-1,3-dienylen und alle anderen Wasserstoff sind.

Besonders bevorzugte Pyrrolidiniumionen (Iu) sind solche, bei denen unabhängig voneinander
R¹ und R⁷ unter Acetyl, Methyl, Ethyl oder n-Butyl ausgewählt sind und
R², R³, R⁴ und R⁵ Wasserstoff bedeuten.

Besonders bevorzugte Ammoniumionen (Iv) sind solche, bei denen unabhängig voneinander
R⁷ unter Acetyl, Methyl, Ethyl oder n-Butyl und
R¹, R², und R³ unter Methyl, Ethyl, n-Butyl, 2-Hydroxyethyl, Benzyl oder Phenyl ausgewählt sind.

Besonders bevorzugte Phosphoniumionen (Iw) sind solche, bei denen unabhängig voneinander
R⁷ unter Acetyl, Methyl, Ethyl oder n-Butyl und
R¹, R², und R³ unter Phenyl, Phenoxy, Ethoxy und n-Butoxy ausgewählt sind.

Unter diesen sind die Ammonium-, Phosphonium-, Pyridinium- und Imidazoliumionen bevorzugt.

Ganz besonders bevorzugt sind als Kationen 1,2-Dimethylpyridinium, 1-Methyl-2-ethylpyridinium, 1-Methyl-2-ethyl-6-methylpyridinium, N-Methylpyridinium, 1-Butyl-2-methylpyridinium, 1-Butyl-2-ethylpyridinium, 1-Butyl-2-ethyl-6-methylpyridinium, N-Butylpyridinium, 1-Butyl-4-methylpyridinium, 1,3-Dimethylimidazolium, 1,2,3-Trimethylimidazolium, 1-n-Butyl-3-methylimidazolium, 1,3,4,5-Tetramethylimidazolium, 1,3,4-Trimethylimidazolium, 2,3-Dimethylimidazolium, 1-Butyl-2,3-dimethylimidazolium, 3,4-Dimethylimidazolium, 2-Ethyl-3,4-dimethylimidazolium, 3-Methyl-2-ethylimidazol, 3-Butyl-1-methylimidazolium, 3-Butyl-1-ethylimidazolium, 3-Butyl-1,2-dimethylmidazolium, 1,3-Di-n-Butylimidazolium, 3-Butyl-1,4,5-Trimethylimidazolium, 3-Butyl-1,4-Dimethylimidazolium, 3-Butyl-2-methylimidazolium, 1,3-Dibutyl-2-methylimidazolium, 3-Butyl-4-methylimidazolium, 3-Butyl-2-ethyl-4-methylimidazolium und 3-Butyl-2-ethylimidazolium, 1-Methyl-3-Octylimidazolium, 1-Decyl-3-Methylimidazolium.

Insbesondere bevorzugt sind 1-Butyl-4-methylpyridinium, 1-n-Butyl-3-methylimidazolium und 1-n-Butyl-3-ethylimidazolium,

Als Anionen sind prinzipiell alle Anionen denkbar.
Bevorzugt als Anionen sind Halogenide, F⁻, CI⁻, Br⁻, I⁻, Acetat CH₃COO⁻, Trifluoracetat CF₃COO⁻, Triflat CF₃SO₃⁻ , Sulfat SO₄²⁻, Hydrogensulfat HSO₄⁻ , Methylsulfat CH₃OSO₃⁻ , Ethylsulfat C₂H₅OSO₃⁻ , Sulfit SO₃²⁻ , Hydrogensulfit HSO₃⁻ , Aluminiumchloride AlCl₄⁻ , Al₂Cl₇⁻, Al₃Cl₁₀⁻, Aluminiumtribromid AlBr₄⁻ , Nitrit NO₂⁻, Nitrat NO₃⁻ , Kupferchlorid CuCl₂⁻ , Phosphat PO₄³⁻, Hydrogenphosphat HPO₄²⁻, Dihydrogenphosphat H₂PO₄⁻, Carbonat C0₃²⁻, Hydrogencarbonat HCO₃⁻.

Ionische Flüssigkeiten können zur Verbesserung von Umsatz und /oder Selektivität von Reaktionen eingesetzt werden. Hier wirken sie entweder selbst katalytisch oder als geeignetes Lösungsmittel. Ein weiteres großes Einsatzgebiet ist die Verwendung von ionischen Flüssigkeit als Hilfsstoff bei der Stofftrennung. Hier können sie bei der Destillation (Extraktiv-Destillation), bei der Extraktion, Absorption oder den Membranverfahren eingesetzt werden. In der WO 02/074718 ist die Verwendung ionischer Flüssigkeiten als Zusatzstoff für die Trennung engsiedender oder azeotroper Gemische offenbart. Ferner sind sie als Wärmeübertragermedium oder Elektrolyt für Batterien verwendbar. Der Einsatz in jeder dieser Verwendung führt entweder zur Verdünnung oder Verschmutzung der Ionischen Flüssigkeit, so dass sie entweder aufgearbeitet oder entsorgt werden muss.

Bisher ist die Herstellung ionischer Flüssigkeiten aufgrund der geringen Mengen noch relativ teuer (ca. 1000 Euro/kg). Bei größeren Kapazitäten sind Kosten von ca. 20 - 10 Euro/kg möglich. Aufgrund dieser immer noch relativ hohen Stoffkosten ist es wünschenswert und für die Wirtschaftlichkeit eines Verfahrens wesentlich, dass die ionische Flüssigkeit so lange wie möglich verwendet und recycelt werden kann. Dieses wird normalerweise in einem Verfahren durch Rückführströme bewerkstelligt. Verunreinigungen, insbesondere schwerflüchtige, reichern sich in diesen Rückführströmen an. Diesem begegnet man mit einem Ausschleusungsstrom, der das Aufpegeln verhindert oder zumindest verringert. Die ausgeschleuste verunreinigte ionische Flüssigkeit stellt einen erheblichen Wert dar und man ist bestrebt, diese wiederzugewinnen.

Die Abtrennung von leichter siedenden Komponenten aus Ionischen Flüssigkeiten gestaltet sich meist einfacher, da die ionischen Flüssigkeiten einen nicht messbaren Dampfdruck aufweisen. Die Abtrennung der leichter siedenden Komponenten geschieht durch einfache Verdampfung bzw. Rektifikation.

Problematisch erweist sich jedoch die Abtrennung von schwersiedenden Verunreinigungen von den ionischen Flüssigkeiten. Hierbei sind unter Schwersiedern solche Substanzen zu verstehen, die unter Anwendung der Destillation schlecht von einer ionischen Flüssigkeit abzutrennen sind. Das können Polymere sein, die überhaupt keinen messbaren Dampfdruck haben oder Substanzen, die nur einen geringen Dampfdruck von etwa kleiner als 10 mbar, bevorzugt kleiner 1 mbar bei Raumtemperatur haben. Weiterhin können es Substanzen sein, die besonders stark mit ionischen Flüssigkeiten wechselwirken, so dass sie nur unvollständig aus der Ionischen Flüssigkeit entfernt werden können. Eine wirtschaftliche Aufreinigung der Ionischen Flüssigkeit ist hier durch Verdampfung nicht möglich.

Es ist bekannt, ionische Flüssigkeiten mittels Extraktion von anderen Substanzen zu trennen. Dies wird z.B. nach der Synthese der ionischen Flüssigkeiten angewendet und ist in Wasserscheid und Welton "Ionic liquids in synthesis" 2003 WILEY-VCH Verlag, Weinheim (Seite 17) beschrieben. Nachteilig ist dabei, dass häufig kein geeignetes Lösungsmittel gefunden wird und bei der Trennung eine erhebliche Menge an lonischer Flüssigkeit verloren geht, da sie sich aufgrund geringer Mischungslücken ebenfalls in dem Extraktionsmittel löst. Geeignet ist die Extraktion daher vor allem für unpolare Schwersieder, die sich gut in unpolaren (organischen) Lösungsmitteln lösen. Diese Lösungsmittel mischen sich kaum mit den meisten Ionischen Flüssigkeiten und können daher oft relativ leicht abgetrennt werden. Es kann jedoch auch dazu kommen, dass die störende Verunreinigung sich nicht aus der IF herauswaschen lässt. Diese ist vor allem bei polaren Schwersiedern zu beobachten. Dann müssen polare Lösungsmittel eingesetzt werden, die sich besser mit der Ionischen Flüssigkeit mischen, was den unerwünschten Verlust an Wertstoff (ionischer Flüssigkeit) weiter erhöht.

In Ind. Eng. Chem. Res. (2001), 40(1), 287-292 wird von Prof. Brennecke als alternatives Verfahren die Reinigung von Ionischen Flüssigkeiten mit überkritischem CO₂ beschrieben. Diese Vorgehensweise ist aber technisch relativ aufwendig.

Es stellte sich somit die Aufgabe, ein alternatives Verfahren zur Reinigung von Gemischen enthaltend ionische Flüssigkeiten zu finden, welches den genannten Nachteilen abhilft und das eine verfahrenstechnisch einfache und wirtschaftliche Auftrennung ermöglicht.

Demgemäss wurde ein Verfahren zur Aufarbeitung eines Gemisches enthaltend ionischen Flüssigkeiten und eine weitere Substanz gefunden, welches dadurch gekennzeichnet ist, dass man die enthaltene Substanz mittels adsorptiver Trennverfahren abtrennt.

Adsorptive Trenntechniken erwiesen sich bei dem erfindungsgemäßen Verfahren als verfahrenstechnisch einfache und wirtschaftliche Varianten zur Abtrennung. Generell kennzeichnet adsorptive Trenntechniken, dass die Ionische Flüssigkeit mit einem Feststoff (dem Adsorbens) in Kontakt gebracht wird und sich Verunreinigungen an der Oberfläche des Adsorbens anreichern. Dadurch kann die Menge der Verunreinigungen verringert oder die Verunreinigung ganz von der Ionischen Flüssigkeit getrennt werden. Als für das erfindungsgemäße Verfahren besonders geeignete adsorptive Trennverfahren zeigten sich die Chromatographie, Adsorption und Ionentausch, die im folgenden näher beschrieben werden.

### Chromatographie

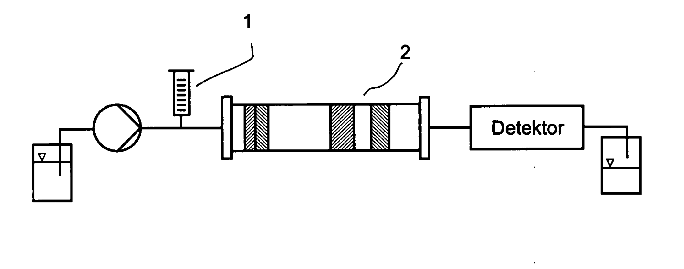

Das Verfahren ist beispielhaft in Figur 1 dargestellt. Hierbei wird die verschmutzte lonische Flüssigkeit in einen kontinuierlich fließenden Lösungsmittelstrom mittels einer Spritze (1) injiziert und zur chromatographischen Säule (2) transportiert. Dort adsorbieren die Ionische Flüssigkeit und die Verunreinigungen an der stationären Phase (Adsorbens). Lösungsmittel und Adsorbens werden vom Fachmann durch Routineversuche so ausgewählt, dass die Adsorption von ionischer Flüssigkeit und Verunreinigung unterschiedlich stark sind. Dieses führt zu einer unterschiedlich schnellen Wanderung der verschiedenen Substanzen durch die Säule. Wenn die Säule lang genug und der Trennfaktor hinreichend groß ist, findet eine Basislinientrennung statt, so dass durch Ventilumschaltung die Komponenten voneinander getrennt werden können und sich nur noch im Lösungsmittel befinden.

Nach der chromatographischen Trennung trennt man das Lösungsmittel von der ionischen Flüssigkeit. Dies kann durch bekannte Trennschritte wie Verdampfung oder Kristallisation erfolgen.

Als geeignete stationäre Phasen erwiesen sich z.B. Silicagele, reversed phase Silicagele, Molekularsiebe, Zeolithe, Aluminiumoxide, saure und basische Ionentauscher. Das Lösungsmittel sollte mit der ionischen Flüssigkeit mischbar sein. Es eignen sich insbesondere polarere Lösungsmittel wie z.B. Wasser, Aceton, Methanol, Ethanol, Propanol, Acetonitril sowie Gemische daraus.

Neben der hier beschriebenen diskontinuierlichen Chromatographie sind auch kontinuierliche chromatographische Trennverfahren geeignet, wie z.B. die simulierte Gegenstromchromatographie. Hierunter versteht man ein chromatographisches Verfahren, bei dem die zu reinigende Ionische Flüssigkeit nicht mehr diskontinuierlich über eine Injektion, sondern kontinuierlich zugegeben wird. Die gereinigte Ionische Flüssigkeit und die Verunreinigung werden ebenso kontinuierlich aus der Apparatur entfernt. Wie eine solche Anlage funktioniert, ist Stand der Technik und kann z.B. in Y. Beste, "Simulierte Gegenstromchromatographie für Mehrkomponenten- und kinetisch kontrollierte Systeme", Fortschritt-Berichte VDI Nr. 712, nachgelesen werden. Dabei empfehlen sich die gleichen Einsatzstoffe als Adsorbens bzw. Lösungsmittel wie voranstehend erwähnt.

### Adsorption bzw. Ionentausch

Hier ist im Gegensatz zur Chromatographie vorteilhafterweise kein Lösungsmittel erforderlich, das mit der ionischen Flüssigkeit in Kontakt kommt und mithin ist auch keine Trennung vom Lösungsmittel durch einen Eindampfungsschritt notwendig. Bei der Adsorption oder beim Ionentausch leitet man die mit der zusätzlichen Substanz verunreinigte ionische Flüssigkeit direkt über eine Säule, die entweder ein Adsorbens (pulverförmig in der Säule) oder ein lonentauscherharz enthält. Als Adsorbens eignen sich bevorzugt Adsorberharz, Aktivkohle, Zeolithe, Aluminiumoxide, Molsieb oder Silicagel sowie reversed phase Silicagele. Im Fall des Adsorbens adsorbieren die Verunreinigungen an der stationären Phase (Adsorbens) bzw. im Fall des Ionentauschs werden die Verunreinigungen durch elektrische Wechselwirkungen an das lonentauscherharz gebunden. Die ionische Flüssigkeit verlässt die Säule in gereinigter Form.

Die stationäre Phase kann nach einmaliger Verwendung entsorgt werden, bevorzugt wird sie nach einer Reinigung einer erneuten Verwendung zugeführt. Hierzu wird die stationäre Phase mit einem geeigneten Regeneriermedium wie Wasserdampf, Lösungsmitteln, Säuren oder Laugen (bei Umgebungs- oder erhöhter Temperatur) regeneriert. Es muss dann lediglich das Regeneriermedium mit den darin befindlichen Verunreinigungen entsorgt werden.

Adsorption und lonentausch können diskontinuierlich (d.h. ein Festbett durchläuft nacheinander alle einzelnen Schritte), quasikontinuierlich (d.h. es werden zwei Festbetten wechselweise betrieben) oder vollkontinuierlich (Karussellanordnungen mit 16 - 32 Säulen und einem Multiport-Ventil) erfolgen.

Die stationäre Phase kann dabei als Festbett, Schwebebett oder Wirbelbett vorliegen.

Das erfindungsgemäße Verfahren bietet eine verfahrenstechnisch einfache und wirtschaftliche Möglichkeit, ionische Flüssigkeiten aus Gemischen in reiner Form abzutrennen. Somit ist es möglich, die bei vielen Verfahren anfallenden Gemische, welche ionische Flüssigkeiten enthalten, entsprechend aufzuarbeiten und die gereinigte ionische Flüssigkeit erneut als Einsatzstoff in dieses Verfahren einzubringen. Hierdurch sinkt der Verbrauch an ionischer Flüssigkeit erheblich und die anfallenden Abfallströme werden minimiert, was neben der Vereinfachung des Verfahrens auch zu einer Erhöhung der Wirtschaftlichkeit führt. Besonders eignet sich das erfindungsgemäße Verfahren zur Abtrennung von schwersiedenden Komponenten, die häufig farbgebend sind und/oder die Eigenschaften der ionischen Flüssigkeit abschwächen und/oder sonstige negative Einflüsse haben

### Beispiele

### Beispiel 1, Schüttelversuche

Bei der verwendeten ionischen Flüssigkeit (IF) handelte es sich um 1-Methyl-Immidazoliumhydrogensulfat. Sie ist nahezu farblos. Nach einigen Anwendungen lag die IF verschmutzt vor. Sie wurde einerseits dunkler, ein Vorgang der regelmäßig bei dem Einsatz von IF bei erhöhten Temperaturen zu beobachten ist. Hinzu kam eine stark dunkelgrüne Farbe, die während einer Destillation entstand. Durch Eindampfen im Rotationsverdampfer konnten alle flüchtigen Komponenten entfernt werden. Die Farbe veränderte sich dabei kaum. Sie wurde konzentrierter. Die Röntgenfluoreszenzanalyse der verschmutzten IF zeigte S in größeren Mengen an. Ferner wurden AI, Cr, Mg, Fe, Ni, Cu nachgewiesen (< 1000 ppm).

Im Schüttelversuch wurde jeweils 25 ml dieser verschmutzten IF über 24 Stunden mit verschiedenen Adsorbentien in Kontakt gebracht. Danach wurde die Flüssigkeit abfiltriert. Der Vergleich der Filtrate mit der Ausgangsprobe ergab in allen Fällen eine deutliche Aufhellung der Farbe und damit einen klar sichtbaren Reinigungseffekt. Getestet wurden Silicagele, Adsorberharze, Ionentauscher, Aktivkohlen und Aluminiumoxide. Der Reinigungseffekt war etwas schwächer bei Aluminiumoxid und besser bei lonentauschern und Adsorberharzen. Mittelmäßig verhielten sich Aktivkohlen. Quantifiziert wurde der Reinigungseffekt über die Entfärbung. Je weniger grün die Ionische Flüssigkeit, desto besser der Reinigungseffekt.

### Beispiel 2, Säulenversuche

Es wurde eine 1 x 25 cm Säule verwendet, die mit einem Adsorberharz (Copolymer Polystyrol-Divinylbenzol) als stationärer Phase gefüllt war. VE-Wasser wurde als Eluent kontinuierlich durch die Säule mit dem Harz gepumpt. Detektiert wurde am Austritt der Säule mit einem UV-VIS-Detektor. Zur Verbesserung der Fließfähigkeit wurde die verschmutzte IF vor der Injektion mit Wasser verdünnt. Die mehrfache Injektion von bis zu 200µl der IF auf das Harz ergab bei 220 nm jeweils einen symmetrischen Peak und bei 430 nm keinen detektierbaren Peak. Bei Injektionen in das System ohne Säule wurden bei beiden Wellenlängen Peaks detektiert. Daraus ergibt sich, dass die farbgebenden Substanzen auf dem Harz adsorbiert wurden.

Nach den Injektionen wurde von Wasser auf Isopropanol als Lösungsmittel gewechselt. Vor der Isopropanolfront wurde ein deutlich bei 430 nm sichtbarer großer Peak beobachtet, was dafür spricht, dass die farbgebenden Substanzen desorbiert wurden. Auch mit anderen im Vergleich zu Wasser weniger polaren Lösungsmitteln konnte eine ähnliche Desorption der Säule erreicht werden. Erfolgreiche Desorptionsversuche wurde z.B. mit Ethanol und Methanol durchgeführt.

### Vergleichsbeispiel

Mit der gleichen Ausgangslösung der verschmutzten Ionischen Flüssigkeit wurde ein Extraktionsversuch durchgeführt. Dazu wurden 25 g Ionische Flüssigkeit mit 25 g n-Hexan gemischt und bei Umgebungstemperatur über mehrere Stunden gerührt. Nach Beendung der Durchmischung trennten sich die beiden Phasen wieder. Die oberer Phase (n-Hexan) blieb klar und farblos und die untere Phase (Ionische Flüssigkeit) war auch unverändert. Es fand also keine Reinigung statt.

## Patentansprüche

1. Verfahren zur Aufarbeitung eines Gemisches enthaltend ionischen Flüssigkeiten und eine weitere Substanz, **dadurch gekennzeichnet, dass** man die enthaltene Substanz mittels adsorptiver Trennverfahren abtrennt.

2. Verfahren nach Anspruch 1, **dadurch gekennzeichnet, dass** man die Abtrennung mittels Ionentausch durchführt.

3. Verfahren nach Anspruch 1, **dadurch gekennzeichnet, dass** man die Abtrennung mittels Chromatographie durchführt.

4. Verfahren nach Anspruch 3, **dadurch gekennzeichnet, dass** man die Abtrennung mittels eines kontinuierlichen chromatographischen Verfahren durchführt.

5. Verfahren nach Ansprüchen 1 bis 4, **dadurch gekennzeichnet, dass** man polare, schwersiedende Verbindungen abtrennt.

6. Verfahren nach Ansprüchen 1-5, **dadurch gekennzeichnet, dass** man als Lösungsmittel Wasser, Methanol, Ethanol, 1-Propanol oder Isopropanol oder Gemische davon einsetzt.

7. Verfahren nach Ansprüchen 1-6, **dadurch gekennzeichnet, dass** man als stationäre Phasen reversed phase Silicagele, Harze, Ionenaustauscher, Zeolithe, Aluminiumoxide oder Aktivkohlen einsetzt.
